# NEW EUROPEAN PATENT SPECIFICATION

(11) **EP 0 093 570 B2**
(45) Date of publication and mention of the opposition decision: **18.11.1993**
(45) Mention of the grant of the patent: 15.03.1989
(21) Application number: 83302363.3
(22) Date of filing: 26.04.1983
(51) Int. Cl.: F22B 21/36, F22B 31/00, F22B 37/48, F22D 1/04, F22G 7/14

(54) **Boiler systems**
Kesselanlagen
Installations de chaudières

(30) Priority: 03.05.1982 US 374358
(43) Date of publication of application: 09.11.1983
(60) Divisional application: 87201776.9
(73) Proprietor: THE BABCOCK & WILCOX COMPANY, New Orleans, Louisiana 70160 (US)
(72) Inventor: Seifert, Thomas P., Wadsworth Ohio 44281 (US); Longfield, Warren E., Wadsworth Ohio 44281 (US)
(74) Representative: Cotter, Ivan John

(56) References cited:
- DE-A- 3 022 880
- FR-A- 724 171
- FR-A- 1 080 140
- FR-A- 1 334 588
- FR-A- 1 444 296
- FR-A- 2 263 487
- GB-A- 1 129 443
- JP-A- 3 718 101
- JP-A- 4 323 760
- JP-A- 4 915 802
- US-A- 2 758 574
- US-A- 2 893 829
- US-A- 2 976 858
- US-A- 3 835 817
- WÄRME, Vol. 85, no. December 1979, Gräfelfing, K. von Paczkowski: "Der Kessel als Bestandteil einer Müllverbrennungsanlage. Seine Entwicklung, sein Entwurf", pages 121-125
- Prospectus Steinmüller: Umweltschutz/Abfalltechnik, Verbrennungsanlagen, May 1981

## Description

This invention relates to boiler systems and particularly, but not exclusively, to boiler systems for furnaces which are capable of burning, in addition to conventional fuel, municipal solid waste or kraft black liquor of the paper industry.

Such boiler systems may include a superheater and an economiser in a convection pass downstream of a combustion chamber. An additional boiler assembly may also be provided between the superheater and the economiser. It is known to provide a plurality of steam and water drums, which, in particular, are connected to steam generating tubes for receiving a steam/water mixture and separating the mixture into a steam supply and a water supply.

German Patent Application Publication No. DE-A-3 022 880 discloses a single drum all-welded boiler system for a furnace having a combustion chamber and a convection pass downstream of the combustion chamber and connected to the combustion chamber in a transition area, the system comprising:
a superheater disposed in the transition area and having an inlet and an outlet;
an economiser disposed in the convection pass and having an inlet and an outlet;
a boiler disposed in the convection pass between the economiser and the superheater; and
a single steam drum having at least one inlet connected to the economiser outlet and at least one outlet connected to the superheater inlet, the drum being located in an area not exposed to combustion gas flow.

Particular problems occur when dealing with boiler systems for burning kraft liquors and solid waste in that inordinate amounts of soot and other impurities are generated which tend to foul heat transfer tubing of the superheaters, boilers and economisers.

Particularly in view of rising energy costs, it has become increasingly interesting to utilise such wastes to generate steam. This interest has resulted in the demand for higher steam pressures and temperatures with extended superheater control ranges.

In addition to the fouling problems in burning kraft liquors, water can leak into the smelt bed formed at the bottom of the furnace chamber, which can cause severe explosion and fire problems due to smelt-water reactions. Close quality control is thus required in the manufacture and construction of pressure parts for such boiler systems.

Another problem arises, in particular, with the burning of municipal solid wastes, in that excess soot and ash material must be dislodged from tubes of heat transfer surface.

US Patent Specification No. US-A-2 893 829 discloses a boiler disposed in the convection pass between an economiser and a superheater. The boiler is made up of banks of tubes welded at the bottom to a common inlet header and at the top to a common outlet header. The economiser is likewise made up of banks of tubes, both boiler and economiser tubes extending vertically for upward flow of fluid.

Japanese Patent Application Publication No. JP-A-49/15 802 discloses a single drum all-welded boiler system for a furnace having a combustion chamber and a convection pass downstream of the combustion chamber and connected to the combustion chamber in a transition area, the system comprising:
a superheater disposed in the transition area and having an inlet and an outlet;
an economiser disposed in the convection pass and having an inlet and an outlet, the economiser comprising at least one modular unit made up of a plurality of tubes;
a boiler disposed in the convection pass between the economiser and the superheater, the boiler comprising at least one modular unit made up of a plurality of tubes; and
a single steam drum having at least one inlet connected to the economiser outlet and at least one outlet connected to the superheater inlet, the drum being located in an area not exposed to combustion gas flow;
wherein:
the tubes in both boiler and economiser modular units extend vertically; and
the tubes in the economiser modular unit are arranged for upward flow of fluid.

The boiler and economiser tubes in JP-A-49/15 802 are arranged in a plurality of parallel planes, the tubes of each plane being welded to a respective inlet header and a respective outlet header. Also, the tubes in one half of the boiler are arranged for downward fluid flow.

According to the invention there is provided a single drum all-welded boiler system of the type defined above, characterised in that:
the boiler modular unit and the economiser modular unit are of duplicate design;
the tubes in the boiler modular unit are welded at the bottom directly to a common inlet header and at the top directly to a common outlet header;
the tubes in the economiser modular unit are welded at the bottom directly to a common inlet header and at the top directly to a common outlet header; and
the tubes in both boiler and economiser modular units are finned and the tubes in the boiler modular unit are arranged for upward flow of fluid.

Preferred embodiments of the present invention described hereinbelow provide boiler systems and furnaces which have various improved characteristics and are particularly suited for the burning of waste fuels such as municipal solid waste and kraft liquors.

The preferred embodiments utilise a single steam drum which, in addition, can be positioned out of high temperature areas of the system and thus be exposed to a less dangerous environment. In addition, the use of a single drum facilitates the shop assembly of welded tube modules for a boiler and/or economiser of the boiler system or steam generating unit. This reduces on-site work necessary in erecting the facility. This is contrasted to the prior art where tubes are expanded at the top and bottom to separate steam and water drums which, themselves, are in the hot gas stream.

The single drum employed in the preferred embodiments has forged steel connections which do not require the rolling and seal welding that is required in the prior art connection of steam and water drums to heat transfer tubes.

The superheater of the preferred embodiments is designed with multiple steam flow paths with high steam mass flow to provide protection against overheating of the tubes. The smaller boiler module cross-section also permits extension of the superheater surface into areas previously occupied by the type of boiler banks utilising two steam and water drums.

Boiler and economiser modules of the preferred embodiments are designed for the upflow of fluid at all times. The ends of a lower header of the boiler module are provided with flanged sections which permit examination for potential deposition of contaminants in the saturated water circuit. The prior art two-drum designs are based on a downflow of water in several of the rear boiler tube rows which act as downcomers and an upflow in the remaining tube sections.

An improved arch construction in the furnace chamber is also provided, in the preferred embodiments, in the upper region of the furnace and below the superheater.

According to another feature of the preferred embodiments, the superheater tubes are provided with a rapper or rapping means or device for dislodging soot and ash from the tubes, with the advantageous retention of a small amount of ash to reduce corrosion of the tubes. A single drum all-welded boiler system dealing with these features is the subject-matter of divisional application EP-A-0254 379.

Succinctly, the preferred embodiments provide a single drum boiler system and a furnace having a combustion chamber and a convection pass connected through a transition area to the combustion chamber, comprising a superheater disposed in the transition area, an economiser disposed in the convection pass and a single steam drum having inlets and outlets connected to the economiser and superheater.

In the preferred embodiments, a boiler tube assembly is arranged between the economiser and the superheater in the convection pass with both the boiler and economiser being fed from below for an upward flow of fluid therethrough, an arch member is provided in the combustion chamber for improved gas flow and temperature distribution entering the superheater, and elongate vertical heat transfer surface is provided to facilitate cleaning and disposal of deposits.

The invention will now be further described, by way of illustrative and non-limiting example, with reference to the accompanying drawings, in which.
Figure 1 is an outline of a one-drum boiler system embodying the invention;
Figure 1a is a schematic top view showing a steam flow path of a superheater used in the embodiment of Figure I;
Figure 2 is a view similar to Figure 1 of a different one-drum boiler system
Figure 2a is a schematic top view of a roof tube arrangement used in the embodiment of Figure I;
Figure 3 is a partial side view of a superheater of the boiler system, showing rapping means used to dislodge soot and ash;
Figure 4 is a plan view of the rapping means along a line 4-4 of Figure 3;
Figure 5 is a rear view of the rapping means along a line 5-5 of Figure 3;
Figure 6 is a perspective view showing tube modules used for an economiser and boiler of a system embodying the invention; and
Figure 7 is an enlarged side elevational view showing a preferred embodiment of the rapping means.

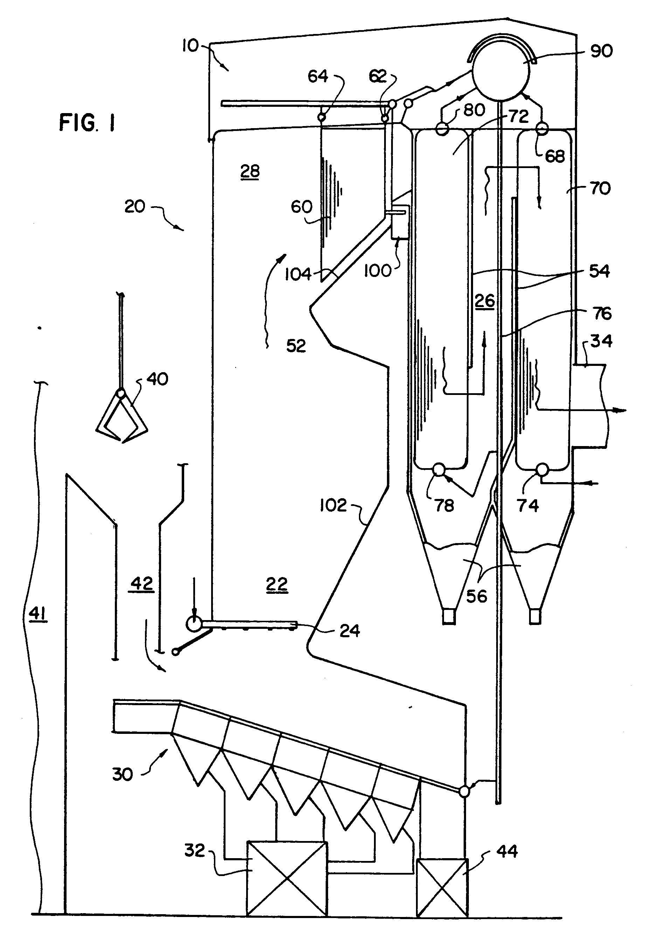

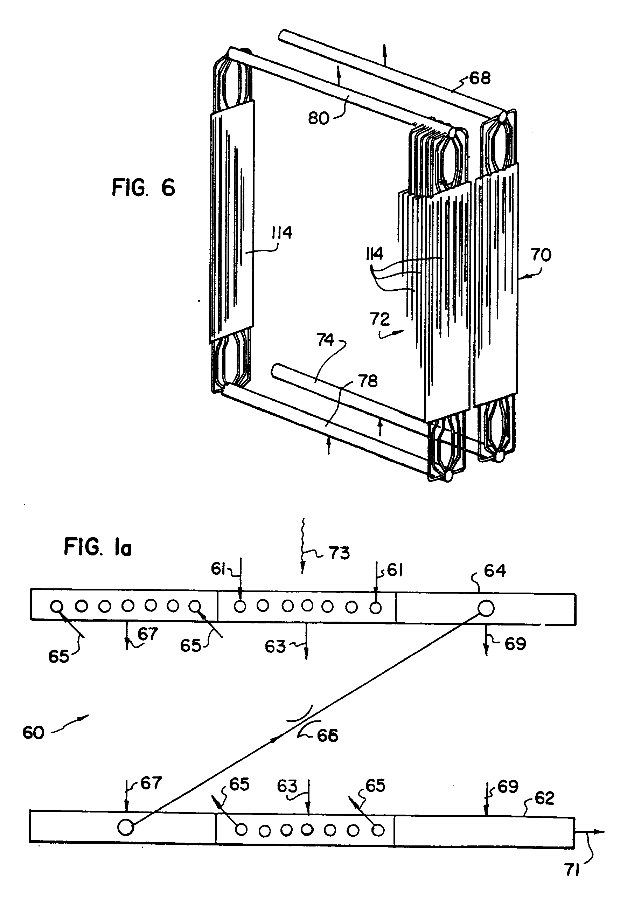

Referring to the drawings, Figure 1 shows a one drum boiler system 10 and a furnace 20. The furnace 20 includes combustion means which is capable of burning various fuels. In the embodiment shown the combustion means 30 is arranged to burn municipal solid waste which is supplied, for example, by a grapple 40 which transfers the municipal solid waste from a bin 41 into a chute 42 from which it is transferred to combustion means in the form of a stoker 30. The stoker 30 is provided, in known fashion, with air supply means 32 for igniting and burning the waste. The furnace 20 includes a combustion chamber 22 having a lower end which receives overfire air via a supply means 24. A convection pass 26 downstream of the combustion chamber 22 includes an exhaust gas outlet 34 which, in known fashion, may be connected to pollution control equipment and/or a stack.

In the case where municipal solid waste is to be burned, the furnace also includes a quenching basin 44 which receives molten unburned material.

Hot gases produced in the combustion chamber 22 rise in the direction of an arrow 52 through a transition area 28, where the combustion chamber is connected to the convection pass 26, and into the convection pass. In the embodiment shown, the convection pass 26 includes a plurality of baffle walls 54 for directing the exhaust gases in a serpentine path through the convection pass. Thus, collection hoppers 56 may be provided for collecting soot at the bottom of the convection pass 26.

The boiler system 10 includes an economiser or economiser module 70 disposed in the convection pass 26. Water is supplied to a bottom inlet header 74 of the economiser 70. The economiser 70 comprises a module of heat transfer tubes which will be described later in greater detail. Water flow is upward through the tubes to an outlet header 68 and thence to a drum 90.

Water from the drum 90 is fed through a downcomer 76 to supply lower furnace wall headers and to supply a generating bank or boiler generating module 72 through a lower header 78. Fluid flow is upward through the tubes to an upper header 80 and thence to the drum 90.

The boiler system 10 also comprises a super-heater 60 composed of multiple tube sections interconnecting front and rear headers 64 and 62, respectively. Referring to Figure 1a, steam enters a centre section of the front header 64 through multiple connections 61 from the steam drum 90. Steam then flows rearwardly, as indicated by arrows 63, in the direction of gas flow, which is indicated by an arrow 73, and enters a centre section of the rear header 62. Multiple external connections 65 then conduct the steam to a side section of the front header 64 from which the flow is again rearward, as indicated by arrows 67, entering a side section of the rear header 62. Flow is then through external piping to an attemperator 66 and then to an opposite side section of the front header 64. Flow is then again rearward, as indicated by arrows 69, to the rear header 62 from which it exits to a point of use as indicated by an arrow 71.

Referring again to Figure 1, rapping means 100 is provided for rapping the tubes of the super-heater 60 to free the tubes of undesirable deposits. Such rapping means is particularly advantageous where municipal solid waste is to be burned, due to its high content of impurities. The rapping means 100 is more fully described later.

The combustion chamber 22 of the furnace 20 is provided with a first arch structure 102 to improve combustion characteristics in the zone immediately above the stoker 30. A second arch structure 104 is provided in the transition area 28 below the superheater 60 for improved gas flow and gas temperature distribution through the superheater. In addition to the fact that only a single steam drum 90 is used, the illustrated system is distinct from prior approaches to furnace and boiler design of this type in that no superheater screen is provided in the combustion chamber 22.

The long flow economiser 70 and boiler generating modules 72 are unique in application to a unit designed for municipal solid waste disposal. Moreover, the large furnace 20 eliminates the need for screen tubes or boiler surface ahead of the superheater 60.

The positioning of the steam drum 90 in a remote area above the convection pass 26 and not exposed to combustion gas flow also permits the use of all-welded shop assembled modular tube arrangements for the economiser 70 and generating bank 72.

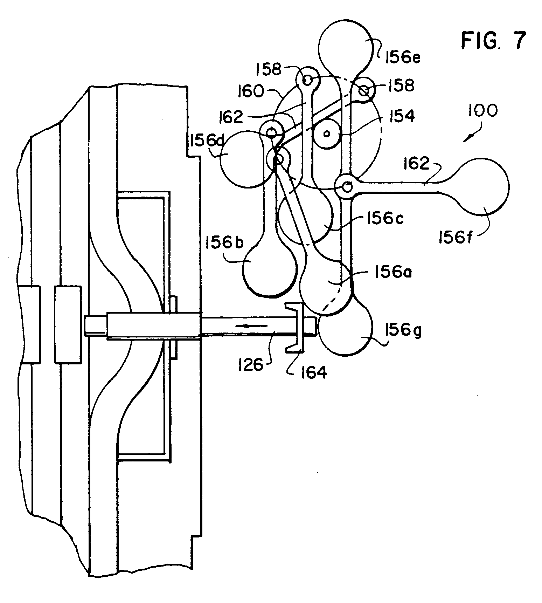

Referring to Figure 6, the economiser module 70 and boiler generating module 72 are of duplicate design. The tubes 114 are 51 mm (2 inches) in outside diameter and are welded to both the top and bottom headers. The vertical runs of the tubes 114 have a back spacing of 190 mm (7.5 inches), and 63 mm (2.5 inches) wide fins are welded on each side of tubes along the vertical run with a 13 mm (0.5 inch) gap between fins. Any desired number of duplicate modules can be provided in the appropriate part of the convection pass, to provide a boiler bank or economiser as needed to suit job requirements.

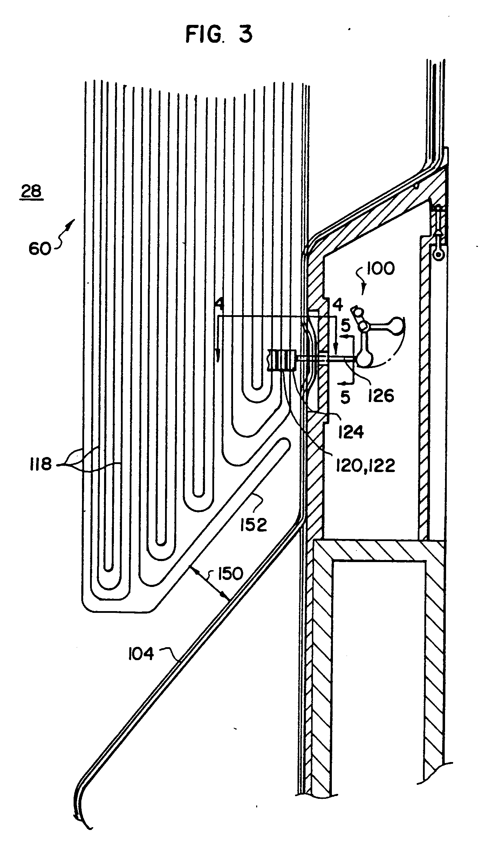

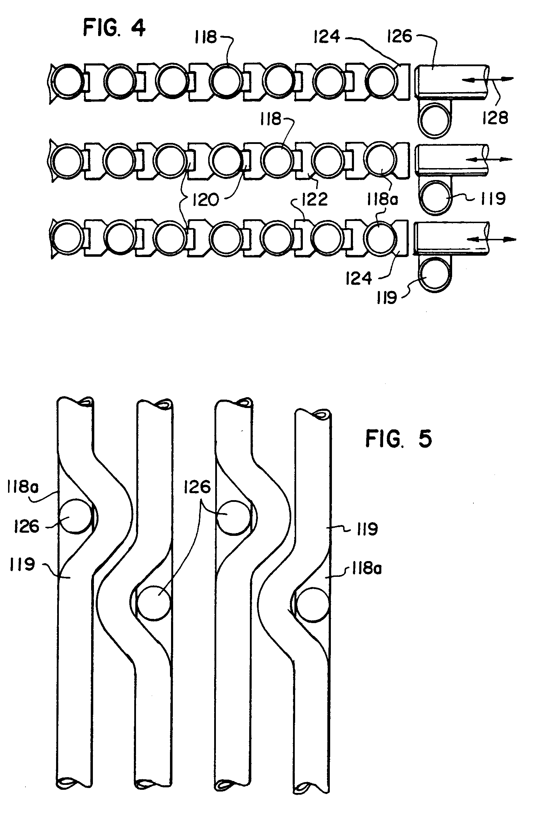

Figures 3, 4 and 5 show details of the super-heater tube rapping means 100. Near the lower end of the superheater 60, only part of which is shown in Figure 3, rows of tubes 118 are provided with aligned lugs 120, 122, only one pair being illustrated. As best shown in Figure 4, each tube 118 includes a rearwardly facing lug 120 and a forwardly facing lug 122. Each rearwardly facing lug 120 of one tube 118 is engaged with and abuts a forwardly facing lug 122 of an adjacent tube 118. On a rearmost tube 118a there is provided an impact body 124 which is larger than the lugs 120, 122 and arranged to receive an impact from a ram 126. Each row of tubes 118 is provided with its own set of lugs and impact body, with the lugs and impact bodies of one row being offset in a vertical direction with respect to those of an adjacent row to facilitate the rapping of every row of tubes. An outer and thus accessible set of tubes 119 is provided without bosses or an impact body and is curved, as shown in Figure 5, to expose the underlying impact bodies 124 to the rams 126. The rams 126 can be reciprocated in the direction of arrows 128 to the impact bodies 124 by any suitable means as illustrated and described in connection with Figure 7.

Access to the rams 126 is provided from the rear of the superheater 60. It has been found that the use of a rapping operation to dislodge soot and foreign matter from the tubes 118 advantageously leaves on the tubes a thin film of ash which acts as a corrosion resisting agent.

Referring again to Figure 3, another innovation in design of this steam generating unit is unusual superheater circuitry wherein one loop, 152, is extended rearwardly over the full depth of the superheater 60 to maintain the tubes in alignment through proper ties, not shown, during the rapping operation. Adequate space 150 is provided between the superheater 60 and the arch structure (arch tubes) 104 to allow for falling ash after rapping and downward disposal to the stoker 30. A feature that should be noted is that the arch structure (furnace arch) 104 and the arrangement of the superheater 60 eliminate gas by-passing the superheater surface, notwithstanding the large space 150 below the superheater.

Referring to Figure 7, the rapping means 100 comprises a shaft 154 which can be rotated relatively slowly and which carries one or more hammers 156. Each hammer 156 is connected at a pivot connection 158 to an arm connected to the shaft 154. With rotation of the shaft 154, the pivot connection 158 moves in a circular path 160. Each hammer 156, having a hammer arm 162, moves sequentially into a series of positions shown at 156a to 156g. At the position 156g, the hammer has just struck a ram 126. At the position 156a, the hammer passes a support 164 which slidable receives a ram 126. In the positions 156b and 156c, the hammer hangs free. In the position 156d, the hammer is rotated, with the aid of its arm 162, about and over the top of the shaft 154. At the position 156f, the hammer is shown in free fall an instant before it strikes the ram 126.

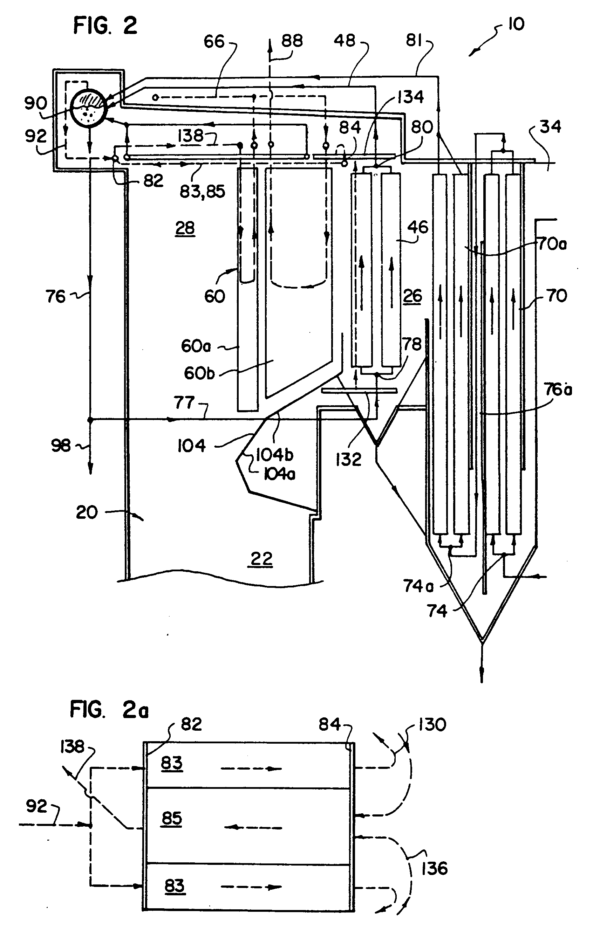

Figures 2 and 2a, in which similar reference numerals are utilised to designate similar parts, partially show a boiler system for a kraft recovery unit which burns kraft liquor as fuel. A lower furnace for burning kraft liquor is similar to a unit shown and described in our US Patent No. 2 893 829 (J.E. Hutton). The unit is also adaptable for use as a power boiler burning coal, gas or oil with modifications to the lower furnace. Such units are used in the pulp and paper industry for the generation of steam used in the pulping process. As with the municipal solid waste burning furnaces, the kraft recovery unit of Figure 2 requires special considerations.

For ease of understanding, solid lines are utilised to designate flow paths of water or a water/ steam mixture, and dotted lines are utilised to designate the flow of steam. Figure 2a is a schematic top view of roof tubes of the furnace.

An economiser inlet header 74 supplies water to the bottom of a first stage economiser 70. Water flow is upward in the module and then downward through external lines 76a to a lower header 74a of a second stage economiser 70a. Water flow is again upward in the module and then through a line 81 to the steam drum 90.

Water is supplied from the steam drum 90 to two downcomers 76, only one of which is shown. The downcomers 76 are not exposed to combustion gas and supply water through a line 77 to a lower header 78 of boiler modules 46, which are disposed in the convection pass 26 between the superheater 60 and the economisers 70 and 70a. Fluid flow is upward in the boiler modules 46 and is delivered over a line 48 to the steam drum 90. As shown by an arrow 98, water is also provided to lower wall headers of the furnace (not shown). Water and steam rise through the furnace walis and are discharged to upper wall headers and thence through risers to the steam drum 90.

Steam flows from the drum 90 through saturated connections 92 to a front roof header 82. As is more clearly shown in Figure 2a, steam flow is then rearward via both outside quarters 83 of the roof tubes to a rear roof header 84. From the roof header 84, flow is then downward via external connections 130 to lower side wall headers 132. Steam flow is upward through the side wall tubes to upper side wall headers 134. Flow is then supplied through external connections 136 to the centre of the rear roof header 84. Steam then flows forwardly in the central one-half 85 of the roof tubes, back to the front roof header 82.

Referring again to Figure 2, steam is supplied to a primary superheater 60a from the centre of the front roof header 82 through connecting tubes 138. From the primary superheater 60a the steam flows through the attemperator 66 and then through a secondary superheater 60b, exiting through a line 88 to a point of use.

The boiler and economiser modules can be arranged as single or multiple units. The features of permitting the use of any required number of modules and the ability to vary the division between boiler and economiser heating surface gives the designer new flexibility-it permits the optimising of surface division as a function of operating pressure and avoids an undesirabie steaming economiser.

As with the embodiment of Figure 1, the economiser and boiler consist of shop-assembled, welded modules as illustrated in Figure 6.

According to another improvement, the arch member 104 for the superheaters can be designed with an upstream section 104a which has been found advantageously to be inclined at about 50° to the horizontal and a downstream section 104b which has been found advantageously to be inclined at about 30° to the horizontal for gas flow and temperature distribution through the super-heater 60.

## Claims

1. A single drum all-welded boiler system (10) for a furnace (20) having a combustion chamber (22) and a convection pass (26) downstream of the combustion chamber and connected to the combustion chamber in a transition area (28), the system (10) comprising:
a superheater (60) disposed in the transition area (28) and having an inlet and an outlet;
an economiser (70) disposed in the convection pass (26) and having an inlet and an outlet, the economiser comprising at least one modular unit (70) made up of a plurality of tubes (114);
a boiler (72) disposed in the convection pass (26) between the economiser (70) and the superheater (60), the boiler comprising at least one modular unit (72) made up of a plurality of tubes (114); and
a single steam drum (90) having at least one inlet connected to the economiser outlet and at least one outlet connected to the superheater inlet, the drum being located in an area not exposed to combustion gas flow;
wherein:
the tubes (114) in both boiler and economiser modular units (72,70) extend vertically; and
the tubes (114) in the economiser modular unit (70) are arranged for upward flow of fluid;
characterised in that:
the boiler modular unit (72) and the economiser modular unit (70) are of duplicate design;
the tubes (114) in the boiler modular unit (72) are welded at the bottom directly to a common inlet header (78) and at the top directly to a common outlet header (80);
the tubes (114) in the economiser modular unit (70) are welded at the bottom directly to a common inlet header (74) and at the top directly to a common outlet header (68); and
the tubes (114) in both boiler and economiser modular units (72,70) are finned and the tubes (114) in the boiler modular unit (72) are arranged for upward flow of fluid.

2. A system according to claim 1, wherein the convection pass (26) and the economiser (70) are elongate in the vertical direction.

3. A system according to claim 1 or claim 2, wherein the tubes (114) in both boiler and economiser units (72,70) include fins welded on each side of the tubes parallel to the direction of gas flow.

4. A system according to claim 1, claim 2 or claim 3, comprising a plurality of downcomer pipes (76) not exposed to combustion gas and extending vertically downwardly from the steam drum (90) to supply water to lower furnace wall headers and to the common inlet header (78) of the boiler modular unit (72).

5. A system according to any one of the preceding claims, wherein the superheater (60) comprises a plurality of vertically extending tubes (118), and the system includes rapping means (100) for applying impacts to the superheater tubes (118).

6. A system according to claim 5, wherein the superheater tubes (118) are arranged in a plurality of aligned rows and the rapping means (100) comprises lugs (120,122) connected to each tube (118) of each row for engaging each tube of each row, an impact member (124) at one end of each row, and a ram (126) movable to strike each impact member.

7. A system according to claim 6, wherein each row is aligned in a flow direction in the transition area (28), each impact member (124) is positioned on a downstream end of each row in said flow direction, and each ram (126) is positioned at a downstream end of the transition area of striking each impact member.

8. A system according to any one of the preceding claims, wherein the furnace includes a stoker (30) and an arch member (102) extending into the combustion chamber (22) for improved combustion characteristics in a zone immediately above the stoker (30).

9. A system according to any one of the preceding claims, wherein the combustion chamber includes an arch member (104) extending into the combustion chamber (22) immediately below the transition area (28), the superheater (60) being disposed above the arch member (104).

10. A system according to claim 9, wherein the arch member (104) includes a portion (104b) that is downstream in a direction of flow of the transition area and is disposed at an angle of about 30° to the horizontal, and an upstream portion (104a) that is connected to the downstream portion (104b) and disposed at an angle of about 50° to the horizontal.

11. A system according to claim 1, including a plurality of roof tubes extending over the top of the combustion chamber (22) and the transition area (28), the tubes extending from a front header (82) spaced from the convection pass (26) to a rear header (84) adjacent the convection pass, and side walls having a lower header (132) and an upper header (134), wherein the front and rear headers (82,84) are divided into a plurality of sections, an outlet of the steam drum (90) for providing steam is connected to at least one of the front header sections (82), at least one of the rear header sections (84) is connected to the lower side wall header (132), the upper side wall header (134) is connected to at least one other rear header section (84), and at least one other front header section (82) is connected to the superheater (60) inlet.

12. A system according to claim 11, wherein the roof tubes are divided into three groups, namely a central group (85) comprising about one-half of the tubes and two outer groups (83) each comprising about one-quarter of the tubes.

## Patentansprüche

1. Ganz geschweißte Kesselanlage (10) mit Einzeltrommel, für einen Ofen mit einer Brennkammer (22) und einem Konvektionsdurchgang (26) stromabwärts von der Brennkammer und mit der Brennkammer in einem Übergangsbereich (28) verbunden, wobei die Anlage (10) aufweist:
einen Überhitzer (60), welcher in dem Übergangsbereich (28) angeordnet ist und einen Einlaß und einen Auslaß aufweist:
einen Abgasvorwärmer (70), welcher in dem Konvektionsdurchgang (26) angeordnet ist und einen Einlaß sowie einen Auslaß hat, wobei der Abgasvorwärmer zumindest eine modulare Einheit (70) hat, die aus einer Mehrzahl von Rohren (114) hergestellt ist;
einen Kessel (72), welcher in dem Konvektiondurchgang zwischen den Abgasvorwärmer (70) und dem Überhitzer (60) angeordnet ist, wobei der Kessel zumindest eine modulare Einheit (72) hat, die aus einer Mehrzahl von Rohren (114) hergestellt ist; und
eine einzelne Dampftrommel (90), weiche zumindest einen Einlaß, welcher mit dem Ausgang des Abgasvorwärmers verbunden ist und zumindest einen Auslaß hat, welcher mit dem Überhitzereinlaß verbunden ist, wobei die Trommel in einem Bereich angeordnet ist, dem nicht der Strom der Verbrennungsgase ausgesetzt ist, wobei
sich die Rohre (114) sowohl in der modularen Einheit (72) des Kessels als auch der modularen Einheit (70) des Abgasvorwärmers in vertikaler Richtung erstrecken; und
die Rohre (114) in der modularen Einheit (70) des Abgasvorwärmers für eine Aufwärtsströmung eines Fluids angeordnet sind,
**dadurch gekennzeichnet,** daß
die modulare Einheit (72) des Kessels und modulare Einheit (70) des Abgasvorwärmers von einem Doppelaufbau sind;
die Rohre (114) in der modularen Einheit (72) des Kessels am Boden unmittelbar an einen gemeinsamen Einlaßverteiler (78) und an der Oberseite unmittelbar an einen gemeinsamen Auslaßsammler (80) geschweißt sind;
die Rohre (114) in der modularen Einheit (70) des Abgasvorwärmers am Boden unmittelbar an einen gemeinsamen Einlaßverteiler (74) und an der Oberseite unmittelbar an einen gemeinsamen Auslaßsammler (68) geschweißt sind; und
die Rohre (114) sowohl in der modularen Einheit (72) des Kessels als auch in der modularen Einheit (70) des Abgasvorwärmers mit Rippen versehen sind und die Rohre (114) in der modularen Einheit (72) des Kessels für eine Aufwärtsströmung des Fluids angeordnet sind.

2. Anlage nach Anspruch 1, wobei der Konvektionsdurchgang (26) und der Abgasvorwärmer (70) in vertikaler Richtung länglich sind.

3. Anlage nach einem der Ansprüche 1 oder 2, wobei die Rohre (114) sowohl in der Kesselals auch in der Abgasvorwärmer-Einheit (72, 70) Rippen aufweisen, welche auf jeder Seite der Rohre parallel zur Richtung der Gasströmung angeschweißt sind.

4. Anlage nach einem der vorstehenden Ansprüche, mit einer Vielzahl von Fallrohren (76), welche nicht dem Verbrennungsgas ausgesetzt sind und sich in vertikaler Richtung nach unten von der Dampftrommel (90) erstrecken, um den unteren Ofenwandverteiler und dem gemeinsamen Einlaßverteiler (78) der modularen Einheit (72) des Kessels Wasser zuzuführen.

5. Anlage nach einem der vorstehenden Ansprüche, wobei der Überhitzer (60) eine Vielzahl von sich in vertikaler Richtung erstreckenden Rohren (118) aufweist und wobei die Anlage Klopfmittel (100) aufweist zum Anbringen von Stößen an die Überhitzerrohre (118).

6. Anlage nach Anspruch 6, wobei die Überhitzerrohre(118) in einer Vielzahl von ausgerichteten Reihen angeordnet sind und die Klopfmittel (100) Ansätze (120, 122) aufweisen, welche mit jedem Rohr (118) jeder Reihe verbunden sind für den Eingriff mit jedem Rohr jeder Reihe, ein Stoßteil (124) an einem Ende jeder Reihe aufweisen sowie eine Ramme (126), welche bewegbar ist, um jedes Stoßteil anzustoßen.

7. Anlage nach Anspruch 6, wobei jede Reihe in einer Fließrichtung in dem Übergangsbereich (28) ausgerichtet ist, jedes Stoßteil (124) an einem abstromigen Ende jeder Reihe in Flußrichtung angeordnet ist und jede Ramme (126) an einem abstromigen Ende des Übergangsbereiches zum Anstoßen jedes Stoßteiles angeordnet ist.

8. Anlage nach einem der vorstehenden Ansprüche, wobei der Ofen eine Brennstoffzufuhr (30) aufweist sowie ein bogenförmiges Teil (102), welches sich in die Brennkammer(22) hinein erstreckt für verbesserte Brenneigensohaflen in einem Bereich unmittelbar oberhalb der Brennstoffzuführung (30).

9. Anlage nach einem der vorstehenden Ansprüche, wobei die Brennkammer ein bogenförmiges Teil (104) aufweist, welches sich in die Brennkammer (22) unmittelbar unterhalb des Übergangsbereiches (28) hinein erstreckt, wobei der Überhitzer (60) oberhalb des bogenförmigen Teiles (104) angeordnet ist.

10. Anlage nach Anspruch 9, wobei das bogenförmige Teil (104) einen Abschnitt (104b) aufweist, welcher in einer Richtung des Flusses des Übergangsbereiches stromabwärts liegt und unter einem Winkel von etwa 30° zur Horizontalen angeordnet ist, sowie einen stromaufwärtigen Abschnitt (104a), welcher mit dem stromabwärtigen (104b) verbunden ist und unter einem Winkel von etwa 50° zur Horizontalen angeordnet ist.

11. Anlage nach Anspruch 1, mit einer Vielzahl von Deckrohren, weiche sich über die Oberseite der Brennkammer (22) und den Übergangsbereich (28) erstrecken, wobei sich die Rohre von einem vorderen Verteiler (82) aus, welcher von dem Konvektionsdurchgang (26) beabstandet ist, zu einem hinteren Verteiler (84) erstrecken, welcher an den Konvektionsdurchgang angrenzt, und mit Seitenwänden, welche einen unteren Verteiler (132) und einen oberen Verteiler (134) aufweisen, wobei der vordere und der hintere Verteiler (82, 84) in eine Vielzahl von Abschnitten aufgeteilt sind, ein Auslaß der Dampftrommel (90) zum Bereitsteilen von Dampf mit zumindest einem der Abschnitte des vorderen Verteilers (82) verbunden ist, mindestens einer der Abschnitte des hinteren Verteilers (84) mit dem unteren Seitenwandverteiler (132) verbunden ist, der obere Seitenwandverteiler (134) mit mindestens einem anderen der Abschnitte des hinteren Verteilers verbunden ist und zumindest ein anderer der Abschnitte des vorderen VerteiIers mit dem Einlaß des Überhitzers (60) verbunden ist.

12. Anlage nach Anspruch 11, wobei die Deckrohre in drei Gruppen aufgeteilt sind, nämlich eine mittlere Gruppe (85), welche etwa die Hälfte der Rohre aufweist und zwei äußere Gruppen (83), welche jeweils etwa ein Vierteil der Rohre aufweisen.

## Revendications

1. Installation de chaudière entièrement soudée à tambour unique (10) pour un four (20) possédant une chambre de combustion (22) et un passage a convection (26) en aval de la chambre de combustion et relié à la chambre de combustion dans une zone de transition (28), l'installation (10) comprenant :
un surchauffeur (60) disposé dans la zone de transition (28) et possédant un orifice d'admission et un orifice de sortie ;
un économiseur (70) disposé dans le passage à convection (26) et possédant un orifice d'admission et un orifice de sortie, l'économiseur comprenant au moins une unité modulaire (70) constituée d'un ensemble de tubes (114) ;
une chaudière (72) disposée dans le passage à convection (26) entre l'économiseur (70) et le surchauffeur (60), la chaudière comprenant au moins une unité modulaire (72) constituée d'un ensemble de tubes (114) ; et
un unique tambour de vapeur (90) possédant au moins un orifice d'admission relié à l'orifice de sortie de l'économiseur et au moins un orifice de sortie relié a l'orifice d'admission du surchauffeur, le tambour étant disposé dans une zone non exposée à la circulation des gaz de combustion ;
dans laquelle :
les tubes (114) dans les deux unités modulaires de chaudière et d'économiseur (72, 70) s'étendent verticalement ; et,
les tubes (114) dans l'unité modulaire d'économiseur (70) sont agencés pour un écoulement vers le haut du fluide ;
caractérisée en ce que :
l'unité modulaire de chaudière (72) et l'unité modulaire d'économiseur (70) sont de conception identique ;
les tubes (114) dans l'unité modulaire de chaudière (72) sont soudés à la base à un collecteur d'admission commun (78) et au sommet directement à un collecteur de sortie commun (80) ;
les tubes (114) dans l'unité modulaire d'économiseur (70) sont soudés à la base directement à un collecteur d'admission commun (74) et au sommet directement à un collecteur de sortie commun (68) ; et,
les tubes (114) dans les deux unités modulaires de chaudière et d'économiseur (72, 70) sont munis d'ailettes et les tubes (114) dans l'unité modulaire de chaudière (72) sont agencés verticalement pour un écoulement vers le haut du fluide.

2. Installation selon la revendication 1, dans laquelle le passage à convection (26), et l'économiseur (70) sont allongés dans la direction verticale.

3. Installation selon la revendication 1 ou la revendication 2, dans laquelle les tubes (114) dans les deux unités de chaudière et d'économiseur (72, 70) comprennent des ailettes soudées de chaque côté des tubes parallèlement à la direction d'écoulement des gaz.

4. Installation selon la revendication 1, la revendication 2 ou la revendication 3, comportant un ensemble de tuyaux descendants (76) non exposés aux gaz de combustion et s'étendant verticalement vers le bas depuis le tambour de vapeur (90) pour délivrer de l'eau aux collecteurs de paroi de four inférieurs et au collecteur d'admission commun (78) de l'unité modulaire de chaudière (72).

5. Installation selon l'une quelconque des revendications précédentes, dans laquelle le surchauffeur (60) comporte un ensemble de tubes (118) s'étendant verticalement, et l'installation comprend des moyens de percussion (100) en vue d'appliquer des chocs aux tubes (118) du surchauffeur.

6. Installation selon la revendication 5, dans laquelle les tubes (118) du surchauffeur sont disposés en un ensemble de rangées alignées et les moyens de percussion (100) comportent des pattes (120, 122) reliées à chaque tube (118) de chaque rangée, un élément de choc (124) à une extrémité de chaque rangée, et un bélier (126) déplaçable en vue de frapper chaque élément de choc.

7. Installation selon la revendication 6, dans laquelle chaque rangée est alignée dans une direction d'écoulement dans la zone de transition (28), chaque élément de choc (124) est disposé sur une extrémité aval de chaque rangée dans ladite direction d'écoulement, et chaque bélier (126) est disposé à une extrémité aval de la zone de transition de frappe de chaque élément de choc.

8. Installation selon l'une quelconque des revendications précédentes, dans laquelle le four comprend un chargeur de foyer (30) et un élément voûte (102) s'étendant dans la chambre de combustion (22) en vue de caractéristiques de combustion améliorées dans une zone immédiatement au-dessus du chargeur (30).

9. Installation selon l'une quelconque des revendications précédentes, dans laquelle la chambre de combustion comprend un élément voûte (104) s'étendant dans la chambre de combustion (22) immédiatement au-dessous de la zone de transition (28), le surchauffeur (60) étant disposé au-dessus de l'élément voûte (104).

10. Installation selon la revendication 9, dans laquelle l'élément voûte (104) comprend une partie (104b) qui est en aval dans une direction d'écoulement de la zone de transition et qui est disposée selon un angle d'environ 30° par rapport à l'horizontale, et une partie amont (104a) qui est reliée à la partie aval (104b) et qui est disposée selon un angle d'environ 50° par rapport à l'horizontale.

11. Installation selon la revendication 1, comprenant un ensemble de tubes de voûte s'étendant au-dessus du sommet de la chambre de combustion (22) et de la zone de transition (28), les tubes s'étendant depuis un collecteur antérieur (82) espacé du passage à convection (26) jusqu'à un collecteur postérieur (84) adjacent au passage à convection, et des parois latérales possédant un collecteur inférieur (132) et un collecteur supérieur (134), dans laquelle les collecteurs antérieur et postérieur (82, 84) sont divisés en un ensemble de sections, un orifice de sortie du tambour de vapeur (90) pour délivrer de la vapeur est relié à au moins l'une des sections de collecteur antérieur (82), au moins l'une des sections de collecteur postérîeur (84) est reliée au collecteur de paroi latérale inférieur (132), le collecteur de paroi latérale supérieur (134) est relié à au moins une autre section de collecteur postérieur (84), et au moins une autre section de collecteur antérieur (82) est reliée à l'orifice d'admission du surchauffeur (60).

12. Installation selon la revendication 11, dans laquelle les tubes de voûte sont divisés en trois groupes, à savoir un groupe central (85) comportant environ la moitié des tubes et deux groupes externes (83) comportant chacun environ un quart des tubes.
